# FASCICULE DE BREVET EUROPEEN

(11) **EP 3 299 808 B1**
(45) Date de publication et mention de la délivrance du brevet: **09.03.2022**
(21) Numéro de dépôt: 17192700.7
(22) Date de dépôt: 22.09.2017
(51) Int. Cl.: G01N 31/22

(54) **TEST DE REMANENCE SALINE**
TEST ZUR MESSUNG DER SALINISCHEN REMANENZ
SALINE REMANENCE TEST

(30) Priorité: 22.09.2016 FR 1658911
(43) Date de publication de la demande: 28.03.2018
(73) Titulaire: FILAB, 21074 Dijon Cedex (FR); APRR, 21850 Saint Apollinaire (FR)
(72) Inventeur: GOUX, Jérôme, 21121 FONTAINE LES DIJON (FR); ROLLET, Nicolas, 21800 CRIMOLOIS (FR)
(74) Mandataire: Oudin, Stéphane

(56) Documents cités:
- CN-A- 104 849 270
- GB-A- 2 154 737
- FUHR P L ET AL: "Embedded fiber optic sensors for bridge deck chloride penetration measurement", OPTICAL ENGINEERING, SOC. OF PHOTO-OPTICAL INSTRUMENTATION ENGINEERS, BELLINGHAM, vol. 37, no. 4, avril 1998 (1998-04), pages 1221-1228, XP000771685, ISSN: 0091-3286, DOI: 10.1117/1.601958

## Description

### Domaine technique

La présente invention concerne le domaine du traitement des chaussées. Plus particulièrement, la présente invention concerne notamment des compositions, des ensembles de parties, des procédés et des utilisations pour la mesure de la quantité d'ions chlorure à la surface d'une chaussée.

### Technique antérieure

Afin d'assurer la pérennité des réseaux routiers durant la période hivernale, des salages récurrents sont réalisés. Les campagnes de salages sont actuellement réalisées à la suite d'un test de rémanence de salinité de la chaussée.

La méthodologie la plus couramment utilisée pour quantifier les chlorures dans un échantillon aqueux est la méthode dite de Mohr. Le principe de ce dosage consiste à doser les chlorures en milieu neutre par une solution titrée de nitrate d'argent en présence de chromate de potassium. La fin de la réaction est indiquée par l'apparition de la teinte rouge caractéristique du chromate d'argent.

L'utilisation de K₂CrO₄ à titre d'indicateur est basée sur la propriété de l'ion CrO₄²⁻ à former avec l'ion Ag+ un précipité rouge brique Ag₂CrO₄ qui ne commence à se déposer qu'après que les ions Cl- à doser ont réagi pour former un précipité sous forme de AgCl.

La méthode de Mohr est donc basée sur le titrage d'une solution de sel d'un halogène (par exemple de NaCl) par une solution d'AgNO₃ en présence de l'indicateur K₂CrO₄.

On termine le titrage au moment où la coloration de la suspension passe du jaune pâle (ce qui s'explique par la présence dans la solution des ions CrO₄²⁻) en rouge brun. La cause de changement de coloration est le début du dépôt du précipité rouge de AgCrO₄ se produit au point équivalent, c'est à dire au moment où tout Cl- est précipité sous forme de AgCl. Toutefois, les différents sels à base de Chromate sont reconnus comme substances Cancérigènes et/ou Mutagènes et/ou Reprotoxiques, plus communément appelés CMR. De ce fait, l'utilisation de ce produit engendre des problèmes de manipulation pour l'opérateur. D'autres techniques permettant de mesurer la rémanence de la salinité à la surface d'une chaussée sont donc souhaitables.

Une autre méthode, moins répandue, consiste à un dosage dit en retour. Cette méthodologie est nommée méthode de Charpentier-Volhard. Les chlorures d'un volume connu d'eau sont précipités en présence d'acide nitrique par un excès de nitrate d'argent titré. L'excès de nitrate d'argent présent est alors déterminé par une solution titrée de sulfocyanure d'ammonium en présence d'alun ferrique, comme indicateur coloré. La solution prend alors une couleur rouge-orangée due à la complexation des ions Fe³⁺ avec les ions SCN- pour donner [Fe(SCN)]²⁺_{.}

Bien que cette méthode donne des résultats satisfaisants, elle nécessite l'utilisation d'un dérivé thiocyanate qui fait partie des perturbateurs endocriniens en tant que molécules dites « goitrogènes » (augmentation de volume, souvent visible, de la glande thyroïde).

Une autre méthode pour la détermination du chlorure dans un échantillon est la méthode dite de Fajan, qui utilise le nitrate d'argent et le colorant 2',7'-dichlorofluorescéine, voir par exemple le brevet britannique GB2154737A, ou le chapitre 4 de la publication de P. L. Fuhr et al: "Embedded fiber optic sensors for bridge deck chloride penetration measurement", Opt. Eng. 37(4), 1221-1228 (avril 1998).

De même, le dosage des ions chlorures par la méthode dite de Vogel est actuellement employé en « routine » sur « site ». Le principe de la méthodologie consiste à ce que les ions chlorures réagissent avec le thiocyanate de mercure(II) pour donner le chlorure de mercure(II) peu dissocié. Le thiocyanate ainsi libéré forme avec les ions fer(III) le rouge thiocyanate de fer(III). La concentration en chlorures est déterminée semi-quantitativement par comparaison visuelle de la couleur de la solution à mesurer avec les zones colorées d'une carte colorimétrique.

Un dosage par titrimétrie avec pipette de titrage existe également en « routine ». La réaction de titrage utilisée est sensiblement similaire. Dans ce cas, les ions chlorures sont titrés avec une solution de nitrate de mercure(II) contre la diphényl-1,5-carbazone comme indicateur en formant le chlorure de mercure(II) peu dissocié. A la fin du titrage les ions mercure(II) excédentaires forment avec l'indicateur un complexe bleu violet. La concentration en chlorures résulte de la consommation de solution de titrage (dosage mercurimétrique).

Ces méthodologies utilisent également un composé en particulier connu de tous pour être nocif pour la santé et l'environnement, le Mercure.

Le principe de la gravimétrie est plus simple que celui de la colorimétrie. Il repose aussi sur la même réaction de précipitation (méthode de Mohr, sans l'utilisation d'un indicateur coloré), mais la quantité de précipité produite est déterminée directement par pesage, après avoir filtré et fait sécher le solide. La masse ainsi obtenue dépend directement de la quantité d'ions chlorures puisque l'on ajoute en excès une solution de nitrate d'argent. La mesure par gravimétrie est donc difficile à mettre en place dans le cadre d'une utilisation sur une chaussée.

Il existe donc un besoin, pour un test de rémanence de salinité utilisable directement sur la chaussée et ne mettant pas en œuvre de produits nocifs pour la santé des opérateurs.

Résumé de l'invention Divulguée ici est une composition pour la détection d'ions chlorure à la surface d'une chaussée remarquable en ce qu'elle comprend un ratio eau/alcool compris entre 2 et 3, entre 1 et 5 mg/ml de nitrate d'argent et plus de 2 mg/ml de 2',7'-dichlorofluorescéine. La présente invention est définie dans les revendications annexées. Les demandeurs ont pu mettre en évidence que l'utilisation d'un ratio eau/alcool particulier permettait d'obtenir une forte amélioration de la qualité de la coloration lorsque cette composition était étalée sur la chaussée. Cette coloration permet, contrairement à celle obtenue avec la même réaction chimique sans ce ratio eau/alcool spécifique, une lecture aisée, par l'opérateur, du résultat du test à même le sol.

Selon un mode de réalisation préféré de l'invention, ladite composition comprend en outre entre 20 et 40% de glycérol.

Par ailleurs, les demandeurs ont également pu mettre en évidence que l'utilisation d'une concentration précise de glycérol permettait le maintien de la composition dans une zone limitée sans inhiber la réaction, ni augmenter le temps d'apparition de la coloration.

Selon un mode de réalisation préféré de l'invention, ladite composition comprend un ratio eau/alcool compris entre 2,2 et 2,6, préférentiellement entre 2,3 et 2,55.

Dans le cadre de la présente invention, le terme « ratio eau/alcool » entend désigner un ratio volume/volume.

Selon un mode de réalisation préféré de l'invention, ledit alcool est choisi dans le groupe comprenant les alcools primaires à chaine carbonée aliphatique, les alcools secondaires et les alcools tertiaires.

Selon un mode de réalisation préféré de l'invention, ledit alcool est choisi dans le groupe comprenant le butanol, l'éthanol, le méthanol, l'isopropanol et le propanol.

Selon un mode de réalisation tout à fait préféré de l'invention, ledit alcool est de l'éthanol.

Selon un mode de réalisation préféré de l'invention, ladite composition comprend entre 25 et 35% de glycérol et encore plus préférentiellement entre 28 et 32% de glycérol.

Dans le cadre de la présente invention, ledit pourcentage de glycérol fait référence au volume de glycérol par rapport au volume final de la composition.

Dans le cadre de la présente invention, le 2',7'-dichlorofluorescéine doit être en excès, de manière préféré la concentration de 2',7'-dichlorofluorescéine est préférentiellement supérieure à 3 mg/ml.

La quantité de nitrate d'argent dans la composition peut varier en fonction de la concentration d'ions chlorure présumée à la surface de la chaussée. Ainsi, il a été déterminé empiriquement que pour être apte à mettre en évidence une protection de la chaussée pour des températures minimum de -10°C la composition comprend préférentiellement une concentration de nitrate d'argent comprise entre 1,3 et 1,5 mg/ml et encore plus préférentiellement comprise entre 1,43 et 1,45 mg/ml.

Par ailleurs, pour être apte à mettre en évidence une protection de la chaussée pour des températures minimum de -15°C la composition comprend préférentiellement une concentration de nitrate d'argent comprise entre 4,2 et 4,4 mg/ml et encore plus préférentiellement comprise entre 4,31 et 4,32 mg/ml.

L'homme du métier est capable de déterminer pour chacun des niveaux de protection envisagés la quantité adéquate de nitrate d'argent à utiliser. Divulguée ici est également une composition consistant en un ratio eau/alcool compris entre 2 et 3, entre 20 et 40 % de glycérol, entre 1 et 5 mg/ml de nitrate d'argent et plus de 2 mg/ml de 2',7'-dichlorofluorescéine.

La présente invention concerne également un ensemble de parties pour la mesure semi-quantitative d'ions chlorure à la surface d'une chaussée remarquable en ce qu'il comprend :
- une première composition comprenant 0.5% (0.5 g par 100 ml de liquide) de nitrate d'argent dans de l'eau ultra pure,
- une deuxième composition comprenant 0.432% de nitrate d'argent, 0.3% de 2',7'-dichlorofluorescéine, 50% (du volume total de liquide) d'eau ultra pure, 20% d'éthanol , et 30% de glycérol, et
- une troisième composition comprenant 0.144% de nitrate d'argent, 0.3% de 2',7'-dichlorofluorescéine, 70% d'eau ultra pure, et 30% d'éthanol.

Cet ensemble de parties représente un kit permettant la réalisation d'un test de rémanence de salinité pour des niveaux de protection de 0°C, -10°c et -15°C qui sont les niveaux de protection usuellement souhaités par les opérateurs.

Par ailleurs, la présente invention concerne un procédé pour la mesure semi-quantitative d'ions chlorure à la surface d'une chaussée remarquable en ce qu'il comprend :
- une première étape consistant à appliquer sur ladite chaussée une solution de nitrate d'argent à la surface de ladite chaussée, en cas d'apparition d'une coloration blanche sur la zone appliquée ledit procédé comprend en outre,
- une deuxième étape consistant à appliquer sur ladite chaussée une composition comprenant un ratio (volume/volume) eau/alcool compris entre 2 et 3, entre 1 et 5 mg/ml de nitrate d'argent et plus de 2 mg/ml de 2',7'-dichlorofluorescéine, et en cas d'apparition d'une coloration rose persistante sur la zone appliquée ledit procédé comprend en outre,
une troisième étape consistant à appliquer sur ladite chaussée une composition comprenant un ratio eau/alcool compris entre 2 et 3, entre 1,4 et 1,5 mg/ml de nitrate d'argent et plus de 2 mg/ml de 2',7'-dichlorofluorescéine.

Selon un mode de réalisation préféré de l'invention lesdites compositions sont appliquées en cercles concentriques.

### Description des modes de réalisation :

### Préparations des compositions :

Trois compositions comprenant les différents éléments listés dans le tableau ci- dessous sont préparés.

Dans le cadre de ce mode de réalisation, la composition destinée au test pour une protection à 0°C sera nommée « test blanc », la composition destinée au test pour une protection à -10°C sera nommée "test -10°C" et la composition destinée au test pour une protection à -15°C sera nommée test -15°C.

**Tableau 1**

| Réactifs | TestBlanc | Test -15°C | Test -10°C |
|---|---|---|---|
| Nitrate d'argent (mg) | 500.00 | 431.64 | 143.88 |
| 2',7'-dichlorofluorescéine (mg) | - | 300.00 | 300.00 |
| Eau ultra pure (mL) | 100.0 | 50.0 | 70.0 |
| Ethanol (mL) | - | 20.0 | 30.0 |
| Glycérol (mL) | - | 30.0 | - |

### Test Blanc :

Une masse m (précision ± 10 mg) de nitrate d'argent est pesée dans un flacon en verre 125 mL, puis dissoute dans V = 100 mL d'eau ultra pure. L'échantillon est ensuite agité vigoureusement jusqu'à obtenir une solution limpide.

### Test -15°C :

Une masse m (précision ± 1 mg) de nitrate d'argent est pesée dans un flacon en verre 125 mL. Une masse m (précision ± 5 mg) de 2',7'-dichlorofluorescéine est ensuite pesée dans le même flacon en verre 125 mL. Le mélange eau ultra pure, éthanol et glycérol est ensuite préparé dans une éprouvette graduée de 100 mL, dans l'ordre suivant :
Ajout de 50 mL d'eau ultra pure
Ajout de 20 mL d'éthanol
Ajout de 30 mL de glycérol

La solution est ensuite agitée vigoureusement, à l'aide d'une baguette en verre, jusqu'à obtenir un mélange limpide.

La solution est versée directement dans le flacon en verre contenant les pesées de nitrate d'argent et de 2',7'-dichlorofluorescéine, correspondantes.

Le réactif ainsi préparé, est ensuite agité vigoureusement.

### Test -10°C :

Une masse m (précision ± 1 mg) de nitrate d'argent est pesée dans un flacon en verre 125 mL. Une masse m (précision ± 5 mg) de 2',7'-dichlorofluorescéine est ensuite pesée dans le même flacon en verre 125 mL.

Le mélange eau ultra pure et éthanol est ensuite préparé dans une éprouvette graduée de 100 mL, dans l'ordre suivant :
Ajout de 70 mL d'eau ultra pure
Ajout de 30 mL d'éthanol

La solution est ensuite agitée vigoureusement, à l'aide d'une baguette en verre, jusqu'à obtenir un mélange limpide. La solution est versée directement dans le flacon en verre contenant les pesées de nitrate d'argent et de 2',7'-dichlorofluorescéine, correspondantes.

Le réactif ainsi préparé, est ensuite agité vigoureusement, à la main.

La 2',7'-dichlorofluorescéine est ajoutée en excès. Les solutions obtenues après agitation contiendront des résidus solides du réactif de 2',7'-dichlorofluorescéine.

### Réalisation du test de rémanence saline :

Le test blanc est appliqué sur la chaussée en test concentrique.

L'apparition d'une coloration blanche sur la zone appliquée (« précipité blanc ») est considérée comme un résultat positif prouvant la présence d'ions chlorure sur la chaussée et une protection pour des températures allant jusqu'à -10°C. Dans le cas contraire, et en fonction des prévisions météorologiques, une campagne de salage peut être mise en œuvre.

En cas de résultat positif, les étapes supplémentaires mettant en œuvre le test -10°C et le test -15°C sont réalisées selon les modalités ci-dessous.

Le test -15°C est appliqué sur la chaussée en cercles concentriques.

L'absence de changement de coloration franche sur la zone appliquée (le Test de couleur jaune/vert reste de couleur jaune/vert sur la chaussée) est considérée comme un résultat positif prouvant la présence suffisante d'ions chlorures sur la chaussée pour une protection à -15°C .

L'apparition d'une coloration rose persistante sur la zone appliquée est considérée comme l'indicateur d'une quantité d'ions chlorure sur la chaussée pas suffisante pour une protection à -15°C. En conséquence, le degré de protection sur la chaussée via l'utilisation du Test -10°C doit être mesuré.

Le test -10°C est appliqué sur la chaussée en cercles concentriques.

L'absence de changement de coloration franche sur la zone appliquée (le Test de couleur jaune/vert reste de couleur jaune/vert sur la chaussée) est considéré comme un résultat positif prouvant la présence de sels sur la chaussée pour une protection à -10°C.

Dans le cas contraire, et en fonction des prévisions météorologiques, une campagne de salage peut être mise en œuvre et le degré de protection sur la chaussée via l'utilisation du Test Blanc.

Si le test blanc est négatif, il y a peu ou pas de sels sur la chaussée et la protection est non assurée.

## Revendications

1. Ensemble de parties pour la mesure semi-quantitative d'ions chlorure à la surface d'une chaussée **caractérisée en ce qu'**il comprend une première composition comprenant 0.5% (0.5 g par 100 ml de liquide) Nitrate d'argent dans de l'Eau ultra pure et, une deuxième composition comprenant 0.432% de Nitrate d'argent, 0.3% de 2',7'-dichlorofluorescéine , 50% (du volume total de liquide) d'Eau ultra pure, 20% d'Ethanol, 30% de Glycérol et, une troisième composition comprenant 0.144% de Nitrate d'argent, 0.3% de 2',7'-dichlorofluorescéine , 70% d'Eau ultra pure, 30% d'Ethanol.

2. Procédé pour la mesure semi-quantitative d'ions chlorure à la surface d'une chaussée **caractérisée en ce qu'**il comprend :
- une première étape consistant à appliquer sur ladite chaussée une solution de nitrate d'argent à la surface de ladite chaussée, en cas d'apparition d'une coloration blanche sur la zone appliquée ledit procédé comprend en outre,
- une deuxième étape consistant à appliquer sur ladite chaussée une première composition comprenant un ratio (volume/volume) eau/alcool compris entre 2 et 3, entre 1 et 5 mg/ml de nitrate d'argent et plus de 2 mg/ml de 2',7'-dichlorofluorescéine, et en cas d'apparition d'une coloration rose persistante sur la zone appliquée ledit procédé comprend en outre,
- une troisième étape consistant à appliquer sur ladite chaussée une composition comprenant un ratio eau/alcool compris entre 2 et 3, entre 1,4 et 1,5 mg/ml de nitrate d'argent et plus de 2 mg/ml de 2',7'-dichlorofluorescéine.

3. Procédé selon la revendication 2 **caractérisé en ce que** lesdites compositions sont appliquées en cercles concentriques.

## Patentansprüche

1. Baugruppe von Teilen zum halbquantitativen Messen von Chloridionen an der Oberfläche einer Fahrbahn, **dadurch gekennzeichnet, dass** sie eine erste Zusammensetzung umfasst, die 0,5 % (0,5 g pro 100 ml an Flüssigkeit) Silbernitrat in ultrareinem Wasser umfasst, und eine zweite Zusammensetzung umfasst, die 0,432 % an Silbernitrat, 0,3 % an 2',7'-Dichlorfluoreszin, 50 % (des Gesamtflüssigkeitsvolumens) an ultrareinem Wasser, 20 % an Ethanol, 30 % an Glyzerin und eine dritte Zusammensetzung umfasst, die 0,144 % an Silbernitrat, 0,3 % an 2',7'-Dichlorfluoreszin, 70 % an ultrareinem Wasser, 30 % an Ethanol umfasst.

2. Verfahren zum halbquantitativen Messen von Chloridionen an der Oberfläche einer Fahrbahn, **dadurch gekennzeichnet, dass** es umfasst:
- einen ersten Schritt, der darin besteht, auf der Fahrbahn eine Silbernitratlösung auf der Oberfläche der Fahrbahn aufzutragen, wobei das Verfahren bei Auftreten einer weißen Einfärbung auf dem aufgetragenen Bereich weiter Folgendes umfasst,
- einen zweiten Schritt, der darin besteht, eine erste Zusammensetzung auf die Fahrbahn aufzutragen, die ein (Volumen/Volumen) Verhältnis von Wasser/Alkohol umfasst, das zwischen 2 und 3, zwischen 1 und 5 mg/ml an Silbernitrat und mehr als 2 mg/ml an 2`,7`-Dichlorfluoreszin liegt, und das Verfahren bei Auftreten einer anhaltenden rosa Einfärbung auf dem aufgetragenen Bereich weiter Folgendes umfasst,
- einen dritten Schritt, der darin besteht, eine Zusammensetzung auf die Fahrbahn aufzutragen, die ein Verhältnis Wasser/Alkohol umfasst, das zwischen 2 und 3, zwischen 1,4 und 1,5 mg/ml an Silbernitrat und mehr als 2 mg/ml an 2',7'-Dichlorfluoreszin liegt.

3. Verfahren nach Anspruch 2, **dadurch gekennzeichnet, dass** die Zusammensetzungen in konzentrischen Kreisen aufgetragen werden.

## Claims

1. Set of parts for the semi-quantitative measurement of chloride ions at the surface of a roadway, **characterised in that** it comprises a first composition comprising 0.5% (0.5 g per 100 ml of liquid) silver nitrate in ultrapure water and, a second composition comprising 0.432% silver nitrate, 0.3% 2',7'-dichlorofluorescein, 50% (of the total liquid volume) ultrapure water, 20% ethanol and 30% glycerol and, a third composition comprising 0.144% silver nitrate, 0.3% 2',7'-dichlorofluorescein, 70% ultrapure water and 30% ethanol.

2. Method for the semi-quantitative measurement of chloride ions at the surface of a roadway, **characterised in that** it comprises:
- a first step of applying, to said roadway, a silver nitrate solution on the surface of said roadway; in the event of the appearance of a white colouration on the area of application, said method further comprises,
- a second step of applying, to said roadway, a first composition comprising a water/alcohol (volume/volume) ratio of between 2 and 3, between 1 and 5 mg/ml of silver nitrate and more than 2 mg/ml of 2',7'-dichlorofluorescein, and in the event of the appearance of a persistent pink colouration on the area of application, said method further comprises,
- a third step of applying, to said roadway, a composition comprising a water/alcohol ratio of between 2 and 3, between 1.4 and 1.5 mg/ml of silver nitrate and more than 2 mg/ml of 2',7'-dichlorofluorescein.

3. Method according to claim 2, **characterised in that** said compositions are applied in concentric circles.
